Europäisches Patentamt

European Patent Office

Office européen des brevets

(11) Publication number: **0 227 324 B1**

## EUROPEAN PATENT SPECIFICATION

(45) Date of publication of patent specification: **03.06.92** (51) Int. Cl.⁵: **C04B 35/58**, C01B 21/068

(21) Application number: **86309264.9**

(22) Date of filing: **27.11.86**

---

(54) Method of making ultrapure silicon nitride/oxynitride powder.

---

(30) Priority: **23.12.85 US 812037**

(43) Date of publication of application:
**01.07.87 Bulletin 87/27**

(45) Publication of the grant of the patent:
**03.06.92 Bulletin 92/23**

(84) Designated Contracting States:
**DE FR GB**

(56) References cited:
**EP-A- 0 150 048**
**WO-A-85/00593**

**CHEMICAL ABSTRACTS, vol. 90, no. 8, 19th February 1979, page 310, abstract no. 59937x, Columbus, Ohio, US; & JP-A-78 118 409 (TOKYO SHIBAURA ELECTRIC CO., LTD) 16-10-1978**

**CERAMIC ENGINEERING AND SCIENCE PROCEEDINGS, vol. 6, no. 9/10, September-October 1985, pages 1278-1288, Columbus, Ohio, US; K. KASAI et al.: "Synthesis of Si3N4 powder by thermal decomposition of Si(NH)2 and sintering properties"**

(73) Proprietor: **FORD MOTOR COMPANY LIMITED**

Eagle Way
**Brentwood Essex CM13 3BW(GB)**
(84) Designated Contracting States:
**GB**

(73) Proprietor: **FORD-WERKE AKTIENGESELL-SCHAFT**
**Werk Köln-Niehl Henry-Ford-Strasse Postfach 60 40 02**
**W-5000 Köln 60(DE)**
(84) Designated Contracting States:
**DE**

(73) Proprietor: **FORD FRANCE SOCIETE ANONYME**
**344 Avenue Napoléon Bonaparte B.P. 307**
**F-92506 Rueil Malmaison Cedex(FR)**
(84) Designated Contracting States:
**FR**

(72) Inventor: **Beckwith, Elaine Cecilia**
**20611 Woodbend Drive**
**Northville§Michigan 48167(US)**
Inventor: **Williams, Robert Mantell**
**34809 Burton Lane**
**Livonia Michigan 48154(US)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

(74) Representative: **Messulam, Alec Moses et al
A. Messulam & Co. 24 Broadway
Leigh on Sea Essex SS9 1BN(GB)**

**Description**

This invention relates to a method of making a readily fusable one component silicon nitride powder and a densified silicon nitride shape from said silicon nitride powder.

Sintering aids are usually added as independent ingredients to a starting powder mixture of silicon or silicon nitride to facilitate the hot pressing or sintering of such powder mixture. The sintering aid forms a liquid pool for agglomerating and cementing the silicon nitride during hot pressing or sintering. The temperature at which the sintering aid melts is of some significance because the lower such temperature the greater the economy for carrying out the processing and the reduction in energy required to achieve equivalent results.

It has been recognized by the prior art that silicates, complex oxides and oxynitrides form from mixtures of oxides of silicon or silicon nitride prior to or during hot pressing or sintering and that such silicates, oxides or oxynitrides function as sintering aids (see U.S patents 4,496,503; 4,510,107). In such experimentation by the prior art, it has been found that different specific oxynitrides have been found more desirable than others in promoting lower temperatures and pressures for the hot pressing or sintering processing.

Unfortunately, the aids resulting from such processing are in the fused condition with silicon nitride, and the purity of such aids is dependent upon the purity of the starting silicon or silicon nitride powder, which unfortunately contains contaminants (for example, iron, aluminum, calcium, halides, sulfur, carbon and oxygen). Impurities are also attrited during the mixing or regrinding operations of the starting materials according to the prior art (see U.S. patent 4,496,503 at column 3, lines 20-24). These impurities cause undesirable compositional changes in the grain boundary of ceramics formed from such powders and the high temperature strength and oxidation resistance of these ceramic is degraded. In addition, these known methods require complex and long, such as 72-100 hours, processing conditions, which alter the desired conversion of silicon to silicon nitride having the desired phases.

WO-A-8,500,593 discloses a method of making a densified silicon nitride/oxynitride composite, which comprises shaping a homogenous powder mixture of silicon nitride to form a shaped body and densifying said shaped body by heat fusion to constitute a body of required density and dimension.

What is needed is a method to more economically make a dual phase powder of silicon nitride/oxynitride in the ultrapure desired condition and to do so without resulting in a highly fused mixture.

According to the invention there is provided a method of making a readily fusable, one component silicon nitride powder, the method comprising heating a homogeneous powder mixture of silicon nitride precursor possessing silicon-nitrogen and nitrogen-hydrogen bonds, and a purity equal to or greater than 99.98% and a silicon oxynitride agent having a purity equal to or greater than 99.98% which is effective as a sintering aid, said heating being carried out at a temperature effectively below the fusion temperature for said mixture and for a period of time less than eight hours but sufficient to chemically convert said mixture to a one component powder having grains of silicon nitride bonded and encapsulated by silicon oxynitride crystallite phases, said silicon oxynitride agent including at least 75% of $Y_{10}Si_6O_{24}N_2$ and said homogenous powder mixture including 0.5 to 25% of the silicon yttrium oxynitride.

One component is used herein to mean that substantially each grain of powder carries the complete silicon nitride/oxynitride chemistry to form the final product. The fusable powder is not a mechanical mixture and is a single component material, and the only material that need be charged to make the ceramic. A single component powder can consist essentially of pure silicon nitride and chemically reacted pure oxynitride phases.

The precursor is preferably silicon imide having the formula $Si(NH)_2$ which possesses an average particle size of less than one micron. Such small particle size makes possible the excellent homogeneity of the mixture. Preferably the silicon oxynitride constitutes 2-12.47% of the one component powder.

The mixture is preferably homogenized in the nonaqueous and nonorganic wet condition by mechanically or ultrasonically stirring the oxygen agent into an excess pool of liquid ammonia containing the silicon imide and under a nonoxidizing atmosphere, then subsequently volatilizing the ammonia leaving behind the homogenized dry powder mixture.

Alternatively, the mixture can be homogenized by dry blending the starting powders in a nonoxidizing atmosphere for a period of time of about 24 hours with grinding media and contained of the same nominal composition as the fusable one component silicon nitride powder.

Preferably, the heating is carried out to a temperature range of 1150-1350°C and preferably for a period of at least six hours, the atmosphere being preferably nonoxidizing containing nitrogen, hydrogen, helium and mixtures thereof.

The fusable, one component silicon nitride powder can be subject to forming and heating under fusable temperature conditions to produce a substantially fully densified ceramic shape. Such fusion heating can be carried out by hot pressing, sintering or hot isostatic pressing. The shaping of the powder mixture can be carried out by slip casting, extruding a mixture by die casting, or pressure compaction. Preferably, 1-3% by weight of a silicate forming oxide (e.g., aluminum oxide) is added to the one component powder prior to the forming step.

The fusable, one component silicon nitride powder is characterized by a pure white color and a purity of greater than or equal to 99.98%. It is also characterized by (a) an average particle size of less than one micron, (b) crystalline silicon nitride with a minimum alpha/beta ratio of four, and (c) encapsulating bonding crystalline yttrium silicon oxynitrides. When such silicon nitride single component and silicate forming oxide are hot pressed, the resulting silicon nitride product is characterized by 4-point bend strength of greater than $10.69 \times 10^5$ kPa (155KSI) a bend strength of 1200°C of at least 92% of the strength at room temperature, and Weibull modulus greater than 13, a density greater than 98.5% of theoretical, a modulus of elasticity less than $3.17 \times 10^8$ kPa ($46 \times 10^6$ psi) and a diamond tool wear of less than 0.005 cms (0.002 inch) when removing 0.86 cms (0.338 inch) of product material.

This invention provides a more economical method for manufacturing a pure one component powder (essentially prereacted silicon nitride and oxynitrides) that is useful in conventional heat fusion techniques for creating a fully densified ceramic body. The first aspect of this method requires the making of a pure, readily fusable, one component silicon nitride powder, and comprises heating a powder mixture of a silicon nitride precursor possessing silicon-nitrogen and nitrogen-hydrogen bonds, and an oxynitride agent effective as a sintering aid, each of said silicon nitride precursor and oxynitride having a starting purity of equal to or greater than 99.98% with respect to trace metals, sulfur, halides and carbon. The heating is carried out in a nonoxidizing atmosphere at a temperature effectively below the fusion temperature of the mixture and for a period of time less than eight hours but sufficient to chemically convert the mixture to a one component powder having grains of silicon nitride bonded and encapsulated by silicon oxynitride crystallites.

## Preparation of the Silicon Nitride Precursor

The inventive method requires the use of a silicon nitride precursor which here is preferably in the form of silicon imide having the formula $Si(NH)_2$. Precursors of this type have been formed by the prior art according to several different mechanisms, namely: (a) a liquid-to-gas reaction of a silicon halide and ammonia in the presence of benzene or hexane at -10°C to 5°C for .5-2 hours (see U.S. patent 3,959,446); (b) a solid-to-gas reaction of the silicon halide and ammonia at about -196°C (see O. Glemser and P. Naumann, "Uber den thermischen Abbau von Siliciumdiimid $Si(NH)_2$", Zitschrift fur Anorganiche und Algemeine Chemie, Band 298, 134-141 (1959)); and (c) a liquid-to-liquid organic boundary phase reaction of the silicon halide and ammonia (see U.S. patent 4,196,178).

However, in order to achieve a purity of 99.98% or greater, which is required by this invention, the method of a liquid-to-liquid reaction of the silicon halide and ammonia at significantly subzero temperatures is required. Such a method of making so pure a precursor is disclosed in copending U.S. application Serial No. (85-197) , commonly assigned to the assignee of this invention and filed simultaneously with the present application, the disclosure of which is incorporated herein by reference. In such disclosure, the precursor is essentially made by a method comprising the steps of: (a) continuously reacting liquid silicon halide ($SiCl_4$) with an excess of liquid ammonia (i) in the substantial absence of contaminants, (ii) at a reaction situs in an inert atmosphere to form the silicon nitride precursor as a precipitate, and (iii) with a ratio of liquid ammonia to silicon halide effective to completely react the silicon and to solubilize any gas reaction products and to maintain the desired viscosity of the solution/suspension mix necessary for filtering; (b) simultaneously and continuously withdrawing a filtered portion of the excess liquid ammonia and solubilized ammonium chloride to leave the silicon nitride precursor precipitate in the reaction situs; and (c) adding ammonia to the excess of ammonia in said reaction situs to replace the withdrawn filtered portion of the liquid ammonia. The ratio of ammonia to silicon tetrachloride is maintained greater than 21 molar. The reaction should be carried out with vigorous mechanical or ultrasonic stirring of the liquid mixture and the atmosphere over the liquid mixture is regulated to contain only ammonia vapor and nitrogen. It is essential that the temperature of the liquid mixture be maintained in a temperature range of -33.3°C to -69°C and preferably about -65°C. This can be carried out by employing a cooling jacket around the reaction situs, such jacket containing dry ice or a slush of dry ice and acetone, isopropanol or cellosolve. The temperature is continued to be maintained by recycling withdrawn liquid ammonia and readding it to the reaction situs either (i) as a liquid so as to lower the temperature of the mixture as a result of the cool liquid ammonia itself and/or loss of heat due to evaporation when liquid ammonia is added, or (ii) as a gas to raise the temperature of the mixture as a result of gain of heat from condensation when the gas is cooled to a liquid.

A typical sequence for carrying out the process for producing the silicon imide would be as follows: evacuate the system of the reaction chamber, holding containers and flow tubes or channels to less than $10^{-2}$mm pressure, fill the system with pure nitrogen to just above atmospheric pressure, cool the reaction chamber to preferably -65°C, place in motion the stirring device, fill the reaction chamber with liquid ammonia to desirable level to define an excess pool of liquid ammonia, and then add silicon tetrachloride in droplets to the excess ammonia pool. Liquid ammonia is immediately withdrawn on a continuous basis from the excess pool through a filtering means resulting in the removal of ammonium chloride (which is soluble in the excess liquid ammonia) while leaving behind the silicon imide precipitate. The withdrawn ammonia can be recycled or reconverted for replenishment to the reaction chamber. The replenishment of additional ammonia or concurrent adding of recycled ammonia is carried out to maintain a liquid ammonia/liquid silicon tetrachloride molar ratio greater than 21, and to maintain the temperature of the reaction situs in the range of -33.3°C to -69°C. The ammonium chloride side product can additionally be reacted with sodium or potassium hydroxide to release an additional source of ammonia gas for economy.

The precursor is characterized by silicon-nitrogen and nitrogen-hydrogen bonds and a very reactive surface for second phase (oxynitride) development. The importance of these bonds is due to the high difference in electronegativity of the elements and the possibility of interaction of the free electron pair of nitrogen with the "d" orbitals of silicon. This great difference in electronegativity of silicon and nitrogen leads to the required high thermal stability of the precursor required by this invention. Such bonds result directly from the processing by nucleophilic attack by ammonia on the ionic silicon chlorine bond.

Silicon Oxynitride Agent

To make silicon yttrium oxynitride in the desired ultrapure state (equal to or greater than 99.98% pure) and desired uniform fine particle size, three essential steps are required, such as are disclosed in copending U.S. application Serial No. (85-319), commonly assigned to the assignee of this invention and filed simultaneously herewith, the disclosure of which is incorporated herein by reference. In such disclosure, the essential steps comprise: (a) heating in an inert atmosphere a predetermined amount of hydrated yttrium nitrate to a molten condition and to a substantial dehydration point (defined to be in the range of 85-92%); (b) agitatingly adding (with mechanical or ultrasonic stirring) a predetermined amount of silicon diimide to the molten, substantially dehydrated yttrium nitrate to form a suspension while continuing to effectively heat the suspension to react the water of hydration of said nitrate with the silicon diimide to thereby form an encapsulating silica along with a residue of dehydrated yttrium nitrate; (c) heating the silica, the silicon diimide, and dehydrated yttrium nitrate to a critical temperature level and for a period of time in an inert atmosphere to chemically form the desired yttrium silicon oxynitride. The yttrium nitrate should be selected to have a purity of greater than or equal to 99.9999%.

The heating of the nitrate for dehydration is carried out for a period of time of about 2-4 hours which is effective to reach the 85% dehydration point of yttrium nitrate. During this initial heating, the yttrium nitrate will undergo a substantial change in chemical/physical properties so that it will change from a powder to a melt. The heating must be carried out to a level that substantially dehydrates the nitrate; it is suggested the temperature levels of 340-360°C promote this effect. If it is heated to a level substantially below 340°C, dehydration will be severely limited to less than about 50%. If heated to above 360°C, 100% dehydration can occur, which is disadvantageous because there will be no water of hydration to combine with the imide to form silica, the water of hydration being swept away in the flowing atmosphere (argon stream).

The silicon diimide which is introduced to the melt is selected to have a starting purity of greater than or equal to 99.98% and is best prepared by the method disclosed in copending U.S. application Serial No. (85-197), which was heretofore referred to earlier. The process for making such ultrapure silica diimide was previously discussed. The imide is stirred into the viscous molten mass of substantially dehydrated yttrium-nitrogen-oxygen complex and the heating is continued in the inert atmosphere (argon stream) at a temperature level of 350°C to generate the evolution of brown fumes (mixed oxides of nitrogen). The heating is continued for a period until the evolution of brown fumes ceases, usually about four hours. This allows the water of hydration of the nitrate to react with silicon diimide to form stoichiometric amounts of encapsulating silica along with the residual of dehydrated yttrium-nitrogen-oxygen complex. Such silica is of very nigh purity and is thus formed in situ. The resultant mass is a white homogeneous powder.

The white homogeneous powder is heated to a higher reactive temperature in the range of 1450-1600°C for 4-6 hours in an inert atmosphere to establish the chemical reaction for forming yttrium silicon oxynitride.

The mixture of silicon nitride precursor and the silicon yttrium oxynitride can be blended or homogenized as the last step after the formation of the silicon imide, wherein an excess liquid of ammonia pool is present. The silicon yttrium oxynitride can be added to the excess liquid ammonia pool and mechanically or ultrasonically stirred to associate in a uniform homogeneous manner with the silicon imide precipitate. The liquid ammonia is then driven off by removing the cooling jacket and warming to room temperature leaving a thoroughly blended mixed powder.

Alternatively, the mixture can be homogenized by blending in a dry blending container with grinding media and container made of the same nominal composition as desired fusable, one component silicon nitride powder for a period of about 24 hours. The amount of silicon yttrium oxynitride is usable in the range of 4-19% when formulating silicon nitride for cutting tool use against cast iron.

Heating

The blended mixture is then placed in a crucible of the same nominal composition as the desired fusable, one component silicon nitride powder and inserted into a furnace and heated to the temperature range of 1150-1350°C, certainly to a temperature substantially below the fusion temperature of such imide or oxynitride. The mixture is maintained at such heated temperature for a period of at least four hours, preferably about eight hours, in a nonoxidizing atmosphere containing nitrogen, hydrogen, helium and mixtures thereof.

The silicon imide will chemically transform under such heat conditions to produce crystalline silicon nitride bonded and encapsulated by silicon yttrium oxynitride crystallites. During such reaction, nitrogen and hydrogen will be evolved as a gas to promote the volatilization of $SiO_2$ and SiO, which in turn promotes the formation of alpha phase silicon nitride as opposed to beta phase silicon nitride. The formation of alpha phase silicon nitride involves silicon monoxide as the transient intermediate. Typically, the alpha/beta ratio will be 4-24. This compares very favorably with the prior art techniques where the range of 1.3-12 is attained using only very high temperatures with very complex precautions. The unexpected reduction in operating temperature and in operating time favors diffusion of the byproduct gases and furnace atmosphere because the particles are not fused.

Samples

Several samples were prepared to corroborate certain aspects of this invention. Each sample was made by mixing a silicon nitride precursor in the form of $Si(NH)_2$. Such precursor had silicon-nitrogen and nitrogen-hydrogen bonds. The precursor was mixed with variable amounts of silicon yttrium oxynitride. The starting purities of the silicon nitride precursor and of the oxynitride were recorded along with variable amounts of each of said ingredients as well as the prereaction time and the temperature for prereaction. The mixture was homogenized in accordance with the previous description and subjected to a prereaction heating sequence as earlier described, except for the noted condition of Table I. Then, the fusable, one component silicon nitride powder was analyzed to determine the presence of a crystalline alpha/beta silicon nitride and second phase silicon-yttrium-oxynitride crystallites. 2% by weight aluminum oxide was added to the one component powder by noncontaminating dry milling or nonaqueous, nonorganic wet milling. The alumina has a purity of 99.98% or greater and an average particule size of .3-.5 microns. The powder was then shaped by compaction and subjected to fusion heat treatment in the form of hot pressing at a pressure of $17.2 \times 10^3$- $23.4 \times 10^3$kPa (2500-3400psi) in a temperature of 1038-1704°C (1900-3100°F) for a period of time resulting in a maximum ram movement of .0025-005cms (.001 -.002 inch) within a 10 minute time interval in an atmosphere of nitrogen or a maximum time of six hours. The resulting silicon nitride object was then analyzed to determine the room temperature strength (in a 4-point bend test), the Weibull modulus as well as the strength of the silicon nitride object at elevated temperatures of 1200°C, and other physical properties as listed.

Sample 1 was according to the teachings of this invention and exhibited excellent results.

In sample 2, the purity of the starting materials was less than that required of this invention and resulted in poor physical characteristics of the resulting ceramic: weak bend strength, low Weibull modulus, excessive diamond wear, lower than desired density, and failure at high speed cutting of cast iron.

In sample 3, the amount of silicon yttrium oxynitride that was added to the precursor was only 0.5% and resulted in poor bend strength as well as a very low percentage of the $Y_{10}$ phase in the final one component powder. The sample cracked and analyzed to have less than 60% density.

Correspondingly, in sample 5, the amount of silicon yttrium oxide was in excess of 13%, here specifically 25%, and resulted in extremely poor physical characteristics, including poor bend strength, Weibull modulus and density.

Sample 5, although using proper purity of starting materials and an acceptable proportion of oxynitride additive agent, the prereaction temperature was at a very high level and for a longer period of time than that required of this invention resulting again in low bend strength, low alpha/beta ratio, and low density.

In sample 6, instead of silicon yttrium oxynitride as the additive agent, 6% of an yttrium silicon oxide was incorporated and processed at the other conventional parameters. This resulted in an absence of the $Y_{10}$ phase and physical properties were low in density, strength, and Weibull modulus.

In sample 7, the mixture was processed at too short a period of time, here specifically two hours, for prereaction and resulted in an inability to show a satisfactory degree of $Y_{10}$ phase and had poor physical characteristics, including low density, bend strength, and Weibull modulus.

EP 0 227 324 B1

TABLE I

| Sam-ple | Amount of Silicon Yttrium Oxy-nitride | Purity of Silicon Nitride Precursor/ Silicon Yttrium Oxynitride | Pre-reacting Temp. (°C) & Time | Purity of Prereacted One Component Powder | Alpha/ Beta Ratio | % $Y_{10}$ Phase of 2nd Phase In One Component Powder | Room Temp. 4-Pt. Bend Strength (psi) | Weibull Modulus |
|---|---|---|---|---|---|---|---|---|
| 1 | 6% | $\geq 99.98/$ $\geq 99.98\%$ | 1275 8 hrs. | >99.98% | 8.5 | >75% | (160,000) $11 \times 10^5$ kPa | 16 |
| 2 | " | 98.5/98.7% | " | <98.5% | 4 | >25% | (80,000) $5.5 \times 10^5$ kPa | 4 |
| 3 | 0.5% | $\geq 99.98/$ $\geq 99.98\%$ | " | >99.98% | 9 | <20% | sample cracked | -- |
| 4 | 25% | "/" | 1275 6 hrs. | " | .25 | <40% | (30,000) $20.7 \times 10^4$ kPa | 4 |
| 5 | 6% | "/" | 1460 24 hrs. | " | .3 | <40% | (26,000) $17.9 \times 10^4$ kPa | 6 |
| 6 | " | "/no sili-con yttrium oxynitride | 1350 6 hrs. | <99.98% | 1.5 | None | (48,000) $33.1 \times 10^4$ kPa | 4 |
| 7 | " | "/" | 1275 2 hrs. | >99.98% | amor-phous | <75% | (30,000) $20.7 \times 10^4$ kPa | 4.4 |

8

TABLE I - Continued

| Sample | 1200°C Temp. Strength % Decrease From Room Temperature | Modulus of Elasticity (psi) | Diamond Wear to Remove (0.338 in.3) 5.54cm³ of stock | Percent of Theoretical Density | Satisfactory Cutting Tool Usage at 6000sfm Against Cast Iron |
|---|---|---|---|---|---|
| 1 | < 8% Decrease | <(46x10$^6$) 3.17x10$^8$ kPa | <(.002 in.) .005 cm | >98.5% | Yes |
| 2 | Sample Cracked | -- | (.01 in.) .026 cm | <98.5 | Fail |
| 3 | -- | -- | -- | <60.0 | " |
| 4 | >60% Decrease | -- | -- | -- | " |
| 5 | -- | -- | -- | <60.0 | " |
| 6 | -- | -- | -- | <98.5 | " |
| 7 | -- | -- | -- | <98.5% | " |

Claims

1. A method of making a readily fusable, one component silicon nitride powder, the method comprising heating a homogeneous powder mixture of silicon nitride precursor possessing silicon-nitrogen and nitrogen-hydrogen bonds, and a purity equal to or greater than 99.98% and a silicon oxynitride agent having a purity equal to or greater than 99.98% which is effective as a sintering aid, said heating being carried out at a temperature effectively below the fusion temperature for said mixture and for a period of time less than eight hours but sufficient to chemically convert said mixture to a one component powder having grains of silicon nitride bonded and encapsulated by silicon oxynitride crystallite phases, said silicon oxynitride agent including at least 75% of $Y_{10}Si_6O_{24}N_2$ and said homogenous powder mixture including 0.5 to 25% of the silicon yttrium oxynitride.

2. A method as claimed in Claim 1, in which said homogenous powder mixture includes 4 to 19% of the silicon yttrium oxynitride.

3. A method as claimed in Claim 1 or 2, in which said precursor is silicon imide having an average particle size of less than one micron.

4. A method as claimed in any one of Claims 1 to 3 in which mixture is homogenized prior to heating in the nonaqueous and nonorganic wet condition by mechanically or ultrasonically stirring said oxynitride into an excess pool of liquid ammonia containing said silicon nitride precursor and under a nonoxidizing atmosphere, and subsequently volatilizing the ammonia leaving a homogenized dry powder mixture as residue.

5. A method as claimed in any one of Claims 1 to 3 in which said mixture is homogenized prior to heating by dry grinding/blending in a nonoxidizing atmosphere for a period of about 24 hours using grinding media and container of the same nominal composition as the resulting fusable, one component silicon nitride powder.

6. A method as claimed in any one of the preceding claims in which said heating is carried out in the temperature range of 1150-1350ºC for a period of time of at least six hours.

7. A method as claimed in claim 1, in which the silicon oxnitride constitutes 2-12.47% of said one component powder.

8. A method as claimed in Claim 7, in which said crystalline alpha/beta silicon nitride has an alpha/beta ratio of at least four.

9. A method of making a densified silicon nitride shape comprising forming a shape from said fusable, one component powder made by the method as claimed in any one of the preceding claims and heating said shape to a fusion temperature and under condiions to produce a substantially fully densified shape.

10. A method as claimed in Claim 9, in which 1-3% $Al_2O_3$ is added to the one component powder prior to said forming.

11. A product resulting from the practice of Claim 9 said product being characterised by a 4-point bend strength at room temperature of at least 10.69 x $10^5$ kPa (155,000 psi) and a bend strength at an elevated temperature of 1200ºC of at least 92% of room temperature value.

**Revendications**

1. Procédé pour produire une poudre facilement fusible de nitrure de silicium à un seul constituant, le procédé comprenant le chauffage d'un mélange en poudre homogène d'un précurseur de nitrure de silicium possédant des liaisons silicium-azote et azote-hydrogène, et ayant une pureté égale ou supérieure à 99,98 % , et un agent de production d'oxynitrure de silicium ayant une pureté égale ou supérieure à 99,98%, pouvant efficacement servir d'adjuvant de frittage, ledit chauffage étant effectué à une température se situant effectivement au-dessous de la température de fusion dudit mélange et étant réalisé pendant une période de temps inférieure à huit heures mais suffisante pour convertir chimiquement ledit mélange en une poudre à un seul constituant ayant des grains de nitrure de silicium liés et encapsulés par des phases de cristallites d'oxynitrure de silicium, ledit oxynitrure de silicium comprenant au moins 75 % de $Y_{10}Si_6O_{24}N_2$ et ledit mélange en poudre homogène comprenant 0,5 à 25 % de l'oxynitrure de silicium et d'yttrium.

2. Procédé tel que revendiqué à la revendication 1 , dans lequel ledit mélange en poudre homogène comprend 4 à 19 % de l'oxynitrure de silicium et d'yttrium.

3. Procédé tel que revendiqué à la revendication 1 ou 2, dans lequel ledit précurseur est de l'imidure de silicium ayant une taille particulaire moyenne inférieure à 1 micromètre.

4. Procédé tel que revendiqué dans l'une quelconque des revendications 1 à 3, dans lequel le mélange est homogénéisé avant son chauffage, à l'état humide, non aqueux et non organique, par agitation mécanique ou à l'aide d'ultra-sons de cet oxynitrure dans une masse excédentaire d'ammoniac liquide contenant ledit précurseur de nitrure de silicium et en atmosphère non-oxydante, puis l'on effectue une volatilisation de l'ammoniac, ce qui laisse comme résidu un mélange en poudre sèche homogénisée.

5. Procédé tel que revendiqué dans l'une quelconque des revendications 1 à 3, dans lequel le dit mélange est homogénisé avant son chauffage, par broyage /mélangeage à sec en atmosphère non-oxydante pendant une période d'environ vingt-quatre heures, en utilisant des milieux de broyage et un récipient ayant la même composition nominale que la poudre fusible résultante de nitrure de silicium à un seul constituant.

6. Procédé tel que revendiqué dans l'une quelconque des revendications précédentes, dans lequel on effectue ledit chauffage dans la gamme des températures allant de 1150 à 1350°C pendant une période de temps d'au moins six heures.

7. Procédé tel que revendiqué à la revendication 1 dans lequel l'oxynitrure de silicium constitue de 2 à 12,47 % de ladite poudre à un seul consituant.

8. Procédé tel que revendiqué à la revendication 7, dans lequel ledit nitrure de silicium cristallin alpha/béta présente un rapport alpha/béta au moins égal à quatre.

9. Procédé pour préparer un objet conformé ou façonné en nitrure de silicium densifié ou compacté, comprenant le formage d'un objet conformé obtenu à partir de ladite poudre fusible à un seul constituant, poudre obtenue par le procédé tel que revendiqué dans l'une quelconque des revendications précédentes, et le chauffage dudit objet façonné jusqu'à une température de fusion et dans des conditions permettant de produire un objet façonné quasi totalement compacté ou densifié.

10. Procédé tel que revendiqué à la revendication 9, dans lequel on ajoute 1 à 3 % de $Al_2O_3$ à la poudre à un seul constituant, avant de la soumettre audit formage.

11. Produit résultant de la pratique de la revendication 9, ledit produit étant caractérisé par une résistance à la flexion en quatre points, à température ambiante, d'au moins $10,69 \times 10^5$ kPa (155 000 livres par pouce carré, psi) et par une résistance à la flexion à une température élevée, égale à 1200°C, représentant au moins 92 % de la valeur de la résistance à température ambiante.

**Patentansprüche**

1. Verfahren zur Herstellung eines gut schmelzenden Einkomponenten-Siliciumnitridpulvers, bei dem man eine homogene Pulvermischung aus einem Siliciumnitridvorprodukt mit Silicium-Stickstoff- und Stickstoff-Wasserstoffbindungen und einer Reinheit von gleich oder größer als 99,98% und einem als Sintermittel wirksamen Siliciumnoxinitrid einer Reinheit von gleich oder größer als 99,98% erhitzt, wobei das Erhitzen bei einer effektiv unterhalb der Schmelztemperatur jener Mischung liegenden Temperatur und für weniger als acht Stunden, jedoch für eine zur chemischen Umsetzung jener Mischung zu einem Einkomponentenpulver mit durch Siliciumoxinitrid-Kristallphasen gebundenen und verkapselten Siliciumnitridkörnern ausreichende Zeit erfolgt, wobei dieses Siliciumoxinitridmittel mindestens 75% $Y_{10}Si_6O_{24}N_2$ und dieses homogene Pulvergemisch 0,5 bis 25% Siliciumyttriumoxinitrid enthält.

2. Verfahren nach Anspruch 1, worin jene homogene Pulvermischung 4 bis 19% Siliciumyttriumoxinitrid enthält.

3. Verfahren nach Anspruch 1 oder 2, worin jenes Vorprodukt Siliciumimid mit einer durchschnittlichen Teilchengröße kleiner als ein Mikron ist.

4. Verfahren nach einem der Ansprüche 1 bis 3, bei dem man jene Mischung vor dem Erhitzen im nichtwäßrigen und nichtorganischen nassen Zustand durch mechanisches oder Ultraschall-Einrühren jenes Oxinitrids in ein Bad aus überschüssigem, jenes SiliciumnitridVorprodukt enthaltenden flüssigen Ammoniak unter einer nicht oxidierenden Atmosphäre homogenisiert und anschließend den Ammoniak verdampft, wobei als Rückstand eine homogenisierte Trockenpulvermischung verbleibt.

5. Verfahren nach einem der Ansprüche 1 bis 3, bei dem man jene Mischung vor dem Erhitzen durch Trockenmahlung bzw. -mischen in einer nicht oxidierenden Atmosphäre etwa 24 Stunden lang unter Verwendung von Mahlkörpern und einem Mahlgefäß derselben Zusammensetzung wie das entstehende schmelzbare Einkomponenten-Siliciumnitridpulver homogenisiert.

6. Verfahren nach einen der vorhergehenden Ansprüche, bei dem jenes Erhitzen in dem Temperaturbereich von 1150-1350°C für eine Zeitdauer von mindestens sechs Stunden erfolgt.

7. Verfahren nach Anspruch 1, worin das Siliciumoxinitrid 2-12,47% jenes Einkomponentenpulvers darstellt.

8. Verfahren nach Anspruch 7, worin das Alpha/Betaverhältnis jenes kristallinen Alpha/Beta-Siliciumnitrids mindestens vier beträgt.

9. Verfahren zur Herstellung eines verdichteten Siliciumnitridformkörpers, bei dem man aus jenem schmelzbaren Einkomponentenpulver nach dem Verfahren nach einem der vorhergehenden Ansprüche einen Formkörper bildet und jenen Formkörper unter Bedingungen zur Herstellung eines im wesentlichen voll verdichteten Formkörpers auf die Schmelztemperatur erhitzt.

10. Verfahren nach Anspruch 9, bei dem man dem Einkomponentenpulver vor jener Formung 1-3% $Al_2O_3$ zusetzt.

11. Produkt aus dem Herstellungsverfahren nach Anspruch 9, gekennzeichnet durch eine 4-Punktbiegefestigkeit bei Zimmertemperatur von 10,69 • $10^5$ kPa (155 000 psi) und eine Biegefestigkeit bei einer erhöhten Temperatur von 1200°C von mindestens 92% des Zimmertemperaturwertes.